# EUROPEAN PATENT APPLICATION

(11) **EP 4 583 477 A1**
(43) Date of publication of application: **09.07.2025**
(21) Application number: 23881240.8
(22) Date of filing: 12.06.2023
(51) Int. Cl.: H04L 27/26

(54) **DATA TRANSMISSION METHOD, DATA PROCESSING METHOD, COMMUNICATION DEVICE, MEDIUM, AND PRODUCT**

(30) Priority: 24.10.2022 CN 202211307244
(71) Applicant: ZTE Corporation, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/099710
(87) International publication number: WO 2024/087649

(57) **Abstract**

Embodiments of the present application provide a data transmission method, a data processing method, a communication device, a medium, and a product. The data transmission method comprises: dividing data to be transmitted into N groups, N being an integer greater than or equal to 2; adding a first reference sequence to the head of each group of data, and adding a second reference sequence to the tail of each group of data to obtain N groups of first data sequences; respectively performing inverse Fourier transform on the N groups of first data sequences to obtain N groups of second data sequences; and performing inverse Fourier transform on the N groups of second data sequences to obtain a group of data sequences, and transmitting the group of data sequences on time-frequency resources.

## Description

### CROSS-REFERENCE TO RELATED APPLICATIONS

The present application is proposed based on and claims priority to Chinese Application No. 202211307244.5, filed on October 24, 2022, the disclosure of which is hereby incorporated by reference in its entirety.

### TECHNICAL FIELD

The embodiments of the present application relate to the field of communication technology, and in particular to a data transmission method, a data processing method, a communication device, a medium and a product.

### BACKGROUND

Orthogonal Frequency Division Multiplexing (OFDM) technology is widely used in wireless communications. OFDM technology can reduce the Inter Symbol Interference (ISI) between sub-channels. Cyclic Prefix- Orthogonal Frequency Division Multiplexing (CP-OFMD) technology is one of the OFDM technologies. CP-OFDM can solve the multipath delay problem well, but the CP-OFDM system is prone to inter-subband interference due to large spectrum leakage. As people's requirements for transmission rate are getting higher and higher, the bandwidth is getting larger and larger, and the inter-subband interference is becoming serious.

In the related technologies, the inter-band interference is improved by using the guard interval technology in the frequency domain. However, the above technologies reduce the spectral efficiency. How to reduce the waste of spectrum resources is an urgent problem to be discussed and solved.

### SUMMARY

The embodiments of the present application provide a data transmission method, a data processing method, a communication device, a medium and a product, aiming to reduce the waste of spectrum resources.

In a first aspect, the embodiment of the present application provides a data transmission method, the method comprises: dividing data to be transmitted into N groups, N being an integer greater than or equal to 2; adding a first reference sequence to the head of each group of data, and adding a second reference sequence to the tail of each group of data to obtain N groups of first data sequences; performing inverse Fourier transform on the N groups of first data sequences respectively to obtain N groups of second data sequences; performing inverse Fourier transform on the N groups of second data sequences to obtain a group of data sequences, and transmitting the group of data sequences on time-frequency resources.

In a second aspect, the embodiment of the present application provides a data processing method, the method comprises: dividing data to be transmitted into N groups, N being an integer greater than or equal to 2; adding a first reference sequence to the head of each group of data, and adding a second reference sequence to the tail of each group of data to obtain N groups of first data sequences; performing inverse Fourier transform on the N groups of first data sequences respectively to obtain N groups of second data sequences; performing inverse Fourier transform on the N groups of second data sequences to obtain a group of data sequences.

In a third aspect, the embodiment of the present application provides a communication device comprises: a memory, a processor, and a computer program stored in the memory and executable on the processor, wherein the processor, when executing the computer program, implements the data transmission method described in the first aspect, or the data processing method described in the second aspect.

In a fourth aspect, the embodiment of the present application provides a computer-readable storage medium, having computer-executable instructions stored thereon, wherein the computer-executable instructions are configured for executing the data transmission method described in the first aspect, or the data processing method described in the second aspect.

In a fifth aspect, the embodiment of the present application provides a computer program product, comprising a computer program or computer instructions, wherein the computer program or the computer instructions are stored in a computer-readable storage medium, and a processor of a computer device reads the computer program or the computer instructions from the computer-readable storage medium, and the processor executes the computer program or the computer instructions, so that the computer device implements the data transmission method described in the first aspect, or the data processing method described in the second aspect.

### BRIEF DESCRIPTION OF DRAWINGS

FIG. 1 is a schematic diagram of a communication system provided in an embodiment of the present application.
FIG. 2 is a flow chart of a data transmission method provided in an embodiment of the present application.
FIG. 3 is a schematic diagram of a data transmission process provided in an embodiment of the present application.
FIG. 4 is a schematic diagram of a constellation point modulation data transmission process provided in an embodiment of the present application.
FIG. 5 is a schematic diagram of a data transmission process of a quadratic inverse Fourier transform provided in an embodiment of the present application.
FIG. 6 is a flow chart of a data transmission method provided in another embodiment of the present application.
FIG. 7 is a schematic diagram of a data transmission process provided in another embodiment of the present application.
FIG. 8 is a flow chart of a data transmission method provided in another embodiment of the present application.
FIG. 9 is a schematic diagram of a data transmission process provided in another embodiment of the present application.
FIG. 10 is a flow chart of a data processing method provided in an embodiment of the present application.
FIG. 11 is a schematic diagram of the structure of a communication device provided in an embodiment of the present application.

### DETAILED DESCRIPTION

In order to make the purpose, technical solution and advantages of the present application more clearly understood, the present application is further described in detail below in conjunction with the accompanying drawings and embodiments. It should be understood that the specific embodiments described herein are only used to explain the present application and are not used to limit the present application.

It should be noted that although the functional modules are divided in the device schematic diagram and the logical order is shown in the flowchart, in some cases, the steps shown or described can be performed in a different order from the module division in the device or the order in the flowchart. The terms "first", "second, etc. in the specification and claims and the above-mentioned drawings are used to distinguish similar objects, and are not necessarily used to describe a specific order or sequence.

In the description of the embodiments of the present application, unless otherwise clearly defined, the words such as setting, installing, connecting, etc. should be understood in a broad sense, and those skilled in the relevant technical field can reasonably determine the specific meanings of the above words in the embodiments of the present application in combination with the specific content of the technical solution.

In the embodiments of the present application, the words "further", "exemplarily" or "optionally" are used to indicate examples, illustrations or explanations, and should not be interpreted as being more preferred or more advantageous than other embodiments or design solutions. The use of words such as "further", "exemplarily" or "optionally" is intended to present related concepts in a specific way.

Among the related technologies, Long Term Evolution (LTE) is a 4G (Fourth Generation) wireless cellular communication technology. LTE uses Orthogonal Frequency Division Multiplexing (OFDM) technology, and the time-frequency resources composed of subcarriers and OFDM symbols constitute the wireless physical time-frequency resources of the LTE system. At present, OFDM technology is widely used in wireless communications. Due to the use of Cyclic Prefix (CP), the CP-OFDM system can well solve the multipath delay problem, and divide the frequency selective channel into a set of parallel flat channels, simplifying the channel estimation method, and having a higher channel estimation accuracy. However, the performance of the CP-OFDM system is sensitive to the frequency offset and time offset between adjacent sub-bands, mainly because the spectrum leakage of the system is relatively large, which easily leads to inter-subband interference. At present, the LTE system uses a guard interval in the frequency domain to reduce or eliminate interference. In order to ensure the guarding effect, the guard interval needs to occupy more resources.

In OFDM technology, when performing inverse Fourier transform (IFFT), single IFFT process is usually performed on the entire bandwidth, which involves a large number of points, a high computational complexity, and a long processing time. In scenarios with high latency requirements or a large number of IFFT points, a single IFFT process of the relevant technology cannot meet the latency requirements.

To solve the above problems, the embodiments of the present application provide a data transmission method, a data processing method, a communication device, a medium and a product. By grouping the data to be transmitted, adding a reference sequence to the head and tail of each group of data, when interference or overlap occurs, the interference or overlap part can be obtained according to the reference sequence, the inter-subband interference can be compensated, the guard interval can be reduced, and the spectrum efficiency can be improved; and by performing twice inverse Fourier transforms on the group of the data to be transmitted, the results of the final two IFFTs can be the same as the results of the single IFFT, thereby reducing the processing complexity and improving the processing efficiency.

The embodiments of the present application are further described below in conjunction with the accompanying drawings.

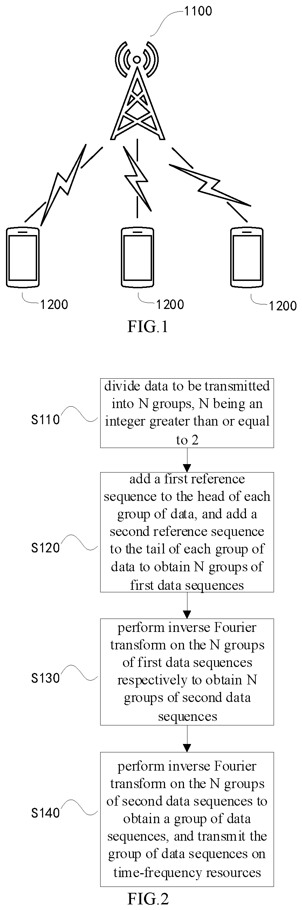

FIG. 1 is a schematic diagram of a communication system provided in an embodiment of the present application. As shown in the figure, in the embodiment, exemplarily, the communication system includes a base station 110 and a terminal 120, and the base station 110 is respectively connected to the terminal 120 for communication.

It can be understood that the number of devices and the communication relationship between devices in the communication system of the embodiment can be expanded and changed according to actual needs, and no specific limitation is made here.

The technical solution of the embodiment of the present application can be applied to various communication systems, such as: Wideband Code Division Multiple Access (WCDMA), Evolved Universal Terrestrial Radio Access Network (E UTRAN), Next Generation Radio Access Network (NG RAN), Long Term Evolution (LTE), Worldwide Interoperability For Microwave Access (WiMAX), Fifth Generation (5G), such as New Radio Access Technology (NR), and future communication systems such as 6G.

Technical solutions of the embodiments of the present application can be applied to various communication technologies, such as microwave communication, optical wave communication, millimeter wave communication, etc. The embodiment of the present application does not limit the specific technology and specific equipment form adopted.

The base station 110 of the embodiment of the present application may be an evolved NodeB (eNB), a Transmission Reception Point (TRP), a Next Generation NodeB (gNB) in an NR system, a base station in other future mobile communication systems, or an access node in a Wireless Fidelity (WiFi) system. The embodiment of the present application does not limit the specific technology and specific device form adopted by the network device.

The terminal 120 of the embodiment of the present application is an entity on the user side for receiving or transmitting signals, such as a mobile phone. The terminal device may also be referred to as a terminal device (terminal), a user equipment (UE), a mobile station (MS), a mobile terminal device (MT), etc. The terminal device may be a car with communication function, a smart car, a mobile phone, a wearable device, a Pad, a computer with wireless transceiver function, a virtual reality (VR) device, an augmented reality (AR) device, a communication device in industrial control, a communication device in self driving, a communication device in remote medical surgery, a communication device in smart grid, a communication device in transportation safety, a communication device in smart city, a communication device in smart home, etc. The embodiments of the present application do not limit the specific technology and specific device form adopted by the devices.

FIG. 2 is a flow chart of a data transmission method provided in an embodiment of the present application. As shown in FIG. 2, the data transmission method may be applied to, but not limited to, a base station, a terminal, or a communication system as provided in FIG. 1. In the embodiment of FIG. 2, the data transmission method may include, but is not limited to, Steps S110, S120, S130, and S140.

Step S110: data to be transmitted is divided into N groups, N being an integer greater than or equal to 2.

In an embodiment, the data to be transmitted are divided into N groups, wherein the number of data in each group is the same.

Step S120: a first reference sequence is added to the head of each group of data, and a second reference sequence is added to the tail of each group of data to obtain N groups of first data sequences.

In an embodiment, the number of data contained in each group of first data sequences is i-th power of 2.

In an embodiment, the data to be transmitted includes constellation point modulated data. The constellation point is the constellation diagram. In the process of digital modulation, different modulation methods have corresponding constellation diagrams. The constellation diagram can be used to judge the bit error rate more intuitively and effectively. The main function of the constellation diagram is to be used for mapping during modulation and to judge the sending point during reception, so as to correctly demodulate the data. After the constellation point modulated data is grouped, a first reference sequence is added to the head of each group of data, and a second reference sequence is added to the tail of each group of data. The original reference signal data of the constellation point modulated data is also divided into different data groups and will not conflict with the first reference sequence and the second reference sequence.

It can be imagined that, in addition to the above-mentioned constellation point modulated data, the data to be transmitted of the present application may also include other data containing reference signals; the present application can group the data containing the reference signal together with the reference signal, add the first reference sequence and the second reference sequence to the head and tail of each group respectively, and perform subsequent operations, and the reference signal data in the data to be transmitted will not affect the first reference sequence and the second reference sequence.

In an embodiment, the first reference sequence and the second reference sequence are both known sequences. When the processed data is subsequently filtered, by the reference sequence in the frequency domain, even if there is a certain amount of overlapping interference between each group of data, the overlapping interference part can be calculated based on the known first sequence and second sequence, avoiding adding too large guard interval to occupy resources.

In an embodiment, the first reference sequence added to the head of each group of data is the same, and the second reference sequence added to the tail of each group of data is the same. It can be understood that the same of the first reference sequence can be the same number of data, or both the same number of data and data content; the same of the second reference sequence can be the same number of data, or both the same number of data and data content.

In an embodiment, the first reference sequence added to the head of each group of data is different, and the second reference sequence added to the tail of each group of data is different. It can be understood that the different of the first reference sequence can be the different number of data, or both the different number of data and the data content; the different of the second reference sequence can be the different number of data, or both the different number of data and the data content.

In an embodiment, the first reference sequence and the second reference sequence are the same. It can be understood that the first reference sequence and the second reference sequence being the same may mean that the number of data is the same, or both the number of data and the data content are the same. The first reference sequence and the second reference sequence being the same can conveniently calculate overlapping interference based on the reference sequence.

In an embodiment, the data to be transmitted is divided into N groups, the number of data in each group is the same, and the first reference sequence and the second reference sequence are added to the head and the tail of each group of data respectively, wherein the number of data in the first reference sequence added to each group of data is the same, and the number of data in the second reference sequence added to each group of data is the same. After adding the first reference sequence and the second reference sequence to each group of data, N groups of first data sequences are obtained, and the number of data contained in each group of first data sequences is the same and is i-th power of 2.

Exemplarily, the transmission data is divided into 4 groups, each group of data contains 28 pieces of data, a first reference sequence is added to the head of each group of data, wherein the first reference sequence contains 2 pieces of data, a second reference sequence is added to the tail of each group of data, wherein the second reference sequence contains 2 pieces of data, and 4 groups of first data sequences are obtained, each group of first data sequences contains 32 pieces of data and satisfies i-th power of 2 (5th power of 2).

In another embodiment, the data to be transmitted is divided into N groups, wherein the number of data in at least some of the groups is different, and the first reference sequence and the second reference sequence are added to the head and the tail of each group of data respectively to obtain N groups of first data sequences, and the number of data contained in each group of first data sequences is the same and is i-th power of 2.

Exemplarily, the transmission data is divided into 4 groups, the first group of data contains 24 pieces of data, the second group of data contains 27 pieces of data, and the third group of data and the fourth group of data each contain 28 pieces of data. A first reference sequence is added to the head of the first group of data, wherein the first reference sequence contains 4 pieces of data, a second reference sequence is added to the tail of the first group of data, wherein the second reference sequence contains 4 pieces of data, and the first group of data after adding the reference sequence contains 32 pieces of data; a first reference sequence is added to the head of the second group of data, wherein the first reference sequence contains 4 pieces of data, a second reference sequence is added to the tail of the second group of data, wherein the second reference sequence contains 3 pieces of data, and the second group of data after adding the reference sequence contains 32 pieces of data; a first reference sequence is added to the head of the third group of data and the fourth group of data respectively, wherein the first reference sequence contains 2 pieces of data, a second reference sequence is added to the tail of the third group of data and the fourth group of data respectively, wherein the second reference sequence contains 2 pieces of data, and the third group of data and the fourth group of data after adding the reference sequence both contain 32 pieces of data; that is, 4 groups of first data sequences are obtained, each group of first data sequences contains 32 pieces of data, and satisfies i-th power of 2 (5th power of 2).

In another embodiment, the data to be transmitted is divided into N groups, wherein the number of data in at least some of the groups is different, and a first reference sequence and a second reference sequence are added to the head and tail of each group of data respectively, and the first reference sequence added to the head of each group of data contains at least R pieces of data, and the R pieces of data are the same between each group; the second reference sequence added to the tail of each group of data contains at least Q pieces of data, and the Q pieces of data are the same between each group; R and Q are positive integers, and N groups of first data sequences are obtained, and the ratio of the number of data contained in each group of first data sequences is i-th power of 2.

Exemplarily, the data to be transmitted are divided into 4 groups, wherein the first group of data and the second group of data each contain 14 pieces of data, and the third group of data and the fourth group of data each contain 28 pieces of data. A first reference sequence is added to the head of the first and second group of data respectively, wherein the first reference sequence contains 1 piece of data, a second reference sequence is added to the tail of the first and second group of data respectively, wherein the second reference sequence contains 1 piece of data, and the first and second group data after adding the reference sequence both contain 16 pieces of data; a first reference sequence is added to the head of the third and fourth group of data respectively, wherein the first reference sequence contains 2 pieces of data, a second reference sequence is added to the tail of the third and fourth group of data respectively, wherein the second reference sequence contains 2 pieces of data, and the third and fourth group data after adding the reference sequence both contain 32 pieces of data; wherein the first reference sequence of the first and second groups has the same odd digits as the first reference sequence of the third and fourth groups, and the second reference sequence of the first and second groups has the same odd digits as the second reference sequence of the third and fourth groups; that is, 4 groups of first data sequences are obtained, wherein two groups of first data sequences contain 16 pieces of data, and the other two groups of first data sequences contain 32 pieces of data. The ratio of the number of data between each group of first data sequences is 1:1:2:2, and the order is from the first group to the fourth group, and the ratio of the number satisfies i-th power of 2 (0th power of 2 and 1st power of 2).

The number of data in each group of first data sequences satisfies i-th power of 2, the number of data between each group of first data sequences is the same or the ratio of the number of data satisfies i-th power of 2, which can perform inverse Fourier transform more quickly, facilitate calculation during inverse Fourier transform, and increase data processing efficiency; inverse Fourier transform and filter processing can also be performed on data with different subcarrier intervals together.

In an embodiment, N groups of first data sequences are transmitted in N frequency domain resource blocks respectively; each resource block includes subcarriers, wherein the number of subcarriers is equal to the number of data contained in each group of data sequences. In the subsequent inverse Fourier transform of each group of first data sequences, the zero-frequency position during the inverse Fourier transform is within the frequency domain resource block corresponding to the group of first data sequences, and the zero-frequency positions of different groups of first data sequences during the inverse Fourier transform are different. Further, the inverse Fourier transform is performed on each group of first data sequences respectively, and the zero-frequency position (or zero subcarrier) during the inverse Fourier transform of each group of first data sequences is respectively in one of the subcarriers of the corresponding frequency domain resource blocks. Thus, the orthogonality of each group of first data sequences in the frequency domain is ensured.

In an embodiment, the N frequency domain resource blocks are all or part of the frequency domain resource blocks in the channel bandwidth, and the data to be transmitted are all or part of the data to be transmitted in the channel bandwidth.

Step S130: inverse Fourier transform is performed on the N groups of first data sequences respectively to obtain N groups of second data sequences.

In an embodiment, the number of data contained in the N groups of second data sequences is the same.

In an embodiment, when the number of data in the N groups of first data sequences after the inverse Fourier transform is different, other data is filled so that the number of data contained in the final N groups of second data sequences is the same. Among them, the other filled data can be the data to be transmitted from other groups after once inverse Fourier transform, or it can be empty data.

In an embodiment, the number of points for the inverse Fourier transform of each group of first data sequences is the same as the number of data contained in the corresponding group of the N groups of first data sequences.

In an embodiment, the ratio of the number of points for the inverse Fourier transform of each group of first data sequences satisfies i-th power of 2.

In an embodiment, the number of points for inverse Fourier transform of each group of first data sequences is the same.

Step S140: inverse Fourier transform is performed on the N groups of second data sequences to obtain a group of data sequences, and the group of data sequences is transmitted on time-frequency resources.

In an embodiment, performing inverse Fourier transform of zero-padding oversampling on data of each column of the N groups of second data sequences to obtain a group of data sequences, and the group of data sequences are transmitted on the time-frequency resources.

In an embodiment, the data with the same number of columns in the N groups of second data sequences constitute a third data sequence, and Step S140 includes at least but is not limited to the following steps:

X groups of third data sequences are obtained according to the data with the same number of columns in the N groups of second data sequences. Where X is the number of data in the second data sequence, that is, the number of groups in the third data sequence is the same as the number of data in the second data sequence.

Inverse Fourier transform is performed on the X groups of third data sequences to obtain X sub-symbols respectively.

The X sub-symbols is concatenated on time domain to obtain a group of fourth data sequences.

The fourth data sequences are transmitted on time domain.

In an embodiment, the number of points for inverse Fourier transform of each group of third data sequences is the same as the number of data contained in the corresponding group.

In an embodiment, the number of points for inverse Fourier transform of each group of third data sequences is greater than N.

In an embodiment, the fourth data sequence is filtered or windowed.

In an embodiment, the filtering is single-phase filtering or multi-phase filtering, wherein the multi-phase filtering is to filter the X sub-symbols obtained after inverse Fourier transform of the third data sequence respectively, so that the results after serial superposition in the time domain are the same as the results of once IFFT.

In an embodiment, the filter function used in the multi-phase filtering includes at least but is not limited to any of the following: root raised cosine function, raised cosine function, rectangular function, IOTA (Isotropic Orthogonal Transform Algorithm) function, etc.

In an embodiment, windowing the fourth data sequence includes: grouping the fourth data sequence, periodically extending the data sequence after grouping, then multiplying the data sequence by a preset function, and finally performing staggered superposition between the groups.

Through the above setting, the effect of twice inverse Fourier transforms can be equivalent to that of once inverse Fourier transform, thereby achieving twice inverse Fourier transforms on the data grouping, reducing the computational complexity and improving the processing efficiency.

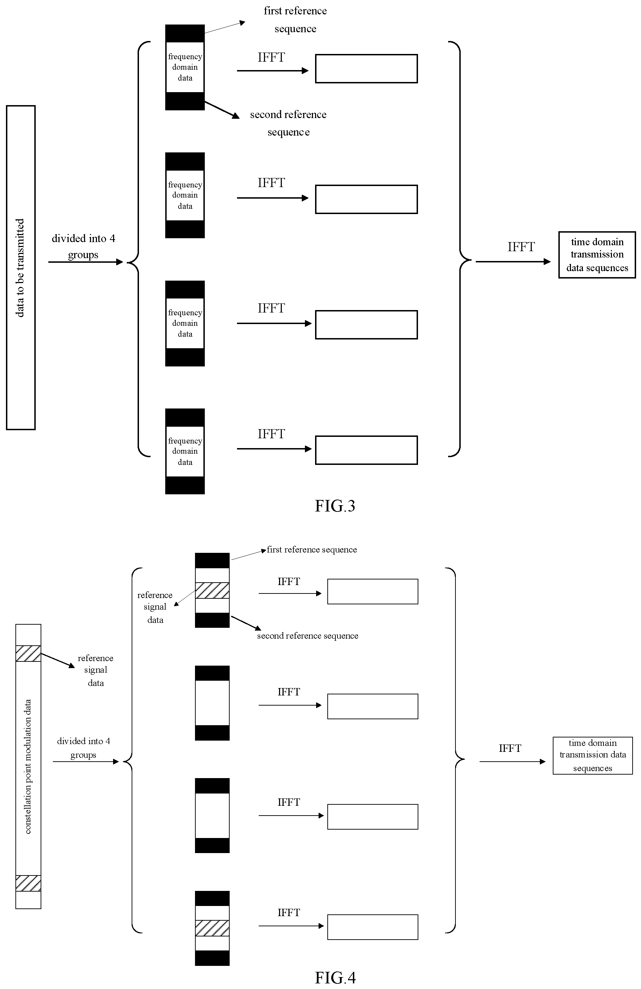

FIG. 3 is taken as an example for an exemplary explanation. FIG. 3 is a schematic diagram of the data transmission process provided in one embodiment of the present application, as shown in FIG. 3:

In this example, the data to be transmitted are divided into 4 groups, each group of data contains 28 pieces of data, and a first reference sequence is added to the head of each group of data. The first reference sequence between each group of data is the same, wherein the first reference sequence contains 2 pieces of data; a second reference sequence is added to the tail of each group of data, and the second reference sequence between each group of data is the same, wherein the second reference sequence contains 2 pieces of data; 4 groups of first data sequences are obtained, and the number of data in each group of first reference sequences is the same, all contain 32 pieces of data, and all satisfy i-th power of 2 (5th power of 2).

32-point IFFT processing is performed on each group of first data sequences to obtain 4 groups of second data sequences. According to the data with the same number of columns in the 4 groups of second data sequences, 32 groups of third data sequences are obtained. Oversampled IFFT processing is performed on the 32 groups of third data sequences respectively to obtain 32 sub-symbols, and the 32 sub-symbols are concatenated in the time domain to form a group of time domain transmission data sequences, i.e., the fourth data sequence. The above fourth data sequence is transmitted on the time-frequency resources.

By adding the first reference sequence and the second reference sequence, when interference or overlap occurs, the interference or overlap part can be obtained according to the reference sequence, the inter-subband interference can be compensated, the guard interval can be reduced, and the spectrum efficiency can be improved; by performing twice inverse Fourier transforms on the groups of data to be transmitted, the results of the final twice IFFTs can be the same as the results of once IFFT, thereby reducing the processing complexity and improving the processing efficiency.

FIG. 4 is taken as an example for an exemplary explanation. FIG. 4 is a schematic diagram of the constellation point modulation data transmission process provided by an embodiment of the present application, as shown in FIG. 4:

In this example, the data to be transmitted is constellation point modulation data, wherein the front part and the back part of the constellation point modulation data carry reference signal data. The constellation point modulation data is divided into 4 groups, each group of data contains 28 pieces of data, wherein the reference signal data is divided to the first group and the fourth group respectively. A first reference sequence is added to the head of each group of data, and the first reference sequence between each group of data is the same, wherein the first reference sequence contains 2 pieces of data; a second reference sequence is added to the tail of each group of data, and the second reference sequence between each group of data is the same, wherein the second reference sequence contains 2 pieces of data; 4 groups of first data sequences are obtained, and the number of data in each group of first reference sequences is the same, all containing 32 pieces of data, and all satisfying i-th power of 2 (5th power of 2).

32-point IFFT processing is performed on each group of first data sequences to obtain 4 groups of second data sequences. According to the data with the same number of columns in the 4 groups of second data sequences, 32 groups of third data sequences are obtained. Oversampled IFFT processing is performed on the 32 groups of third data sequences respectively to obtain 32 sub-symbols, and the 32 sub-symbols are concatenated in the time domain to form a group of time domain transmission data sequences, i.e., the fourth data sequence. The above-mentioned fourth data sequence is transmitted on the time-frequency resources.

It can be understood that the reference signal data carried by the data to be transmitted itself will not interact with the first reference sequence and the second reference sequence, and the data transmission method of the present application is also applicable to the data to be transmitted carrying the reference signal data or other modulated frequency domain data.

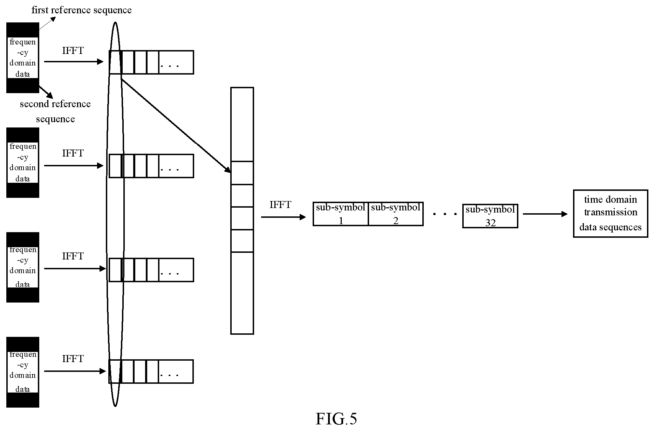

FIG. 5 is taken as an example for an exemplary explanation. FIG. 5 is a schematic diagram of a data transmission process of a quadratic inverse Fourier transform provided in an embodiment of the present application, as shown in FIG. 5:

In this example, the data to be transmitted are divided into 4 groups, each group of data contains 28 pieces of data, and a first reference sequence is added to the head of each group of data, and the first reference sequence between each group of data is the same, wherein the first reference sequence contains 2 pieces of data; a second reference sequence is added to the tail of each group of data, and the second reference sequence between each group of data is the same, wherein the second reference sequence contains 2 pieces of data; 4 groups of first data sequences are obtained, and the number of data in each group of first reference sequences is the same, all contain 32 pieces of data, and all satisfy i-th power of 2 (5th power of 2).

32-point IFFT processing is performed on each group of first data sequences to obtain 4 groups of second data sequences. The 4 groups of second data sequences are placed in 4 rows, 4 pieces of data are taken out by column, and a third data sequence is obtained. For example, the data of the first column of the 4 groups of second data sequences is taken out to obtain a third data sequence; oversampled IFFT processing is performed on the third data sequence to obtain a sub-symbol. For example, oversampled IFFT is performed on the third data formed by the data of the first column of each group of second data sequences to obtain sub-symbol 1. By analogy, 32 groups of third data sequences are obtained based on the data with the same number of columns in the 4 groups of second data sequences. Oversampled IFFT processing is performed on the 32 groups of third data sequences to obtain 32 sub-symbols (sub-symbol 1, sub-symbol 2... sub-symbol 32), and the 32 sub-symbols are concatenated in the time domain to form a group of time domain transmission data sequences, i.e., the fourth data sequence. The above-mentioned fourth data sequence is transmitted on time-frequency resources.

It can be understood that in the examples of FIG. 3, FIG. 4, and FIG. 5 above, the number of data in each group of the first data sequence is the same and satisfies i-th power of 2 (5th power of 2), which can more conveniently perform IFFT calculations and improve processing efficiency. In addition, IFFT and filter processing can be performed together on data with different subcarrier intervals.

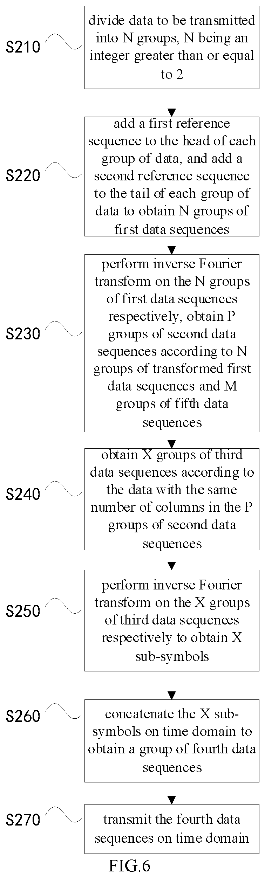

FIG. 6 is a flowchart of a data transmission method provided by another embodiment of the present application. As shown in FIG. 6, the data transmission method can be applied to, but not limited to, a base station, a terminal, or a communication system as provided in FIG. 1. In the embodiment of FIG. 6, the data transmission method may include, but is not limited to, Steps S210, S220, S230, S240, S250, S260, and S270.

Step S210: data to be transmitted is divided into N groups, N being an integer greater than or equal to 2.

In an embodiment, the data to be transmitted are divided into N groups, wherein the number of data in each group is the same.

Step S220: a first reference sequence is added to the head of each group of data, and a second reference sequence is added to the tail of each group of data to obtain N groups of first data sequences, wherein the number of data contained in each group of the first data sequence is i-th power of 2.

In an embodiment, the data to be transmitted includes constellation point modulated data.

It can be imagined that, in addition to the above-mentioned constellation point modulated data, the data to be transmitted of the present application may also include other data containing reference signals; the present application can group the data containing the reference signal together with the reference signal, add the first reference sequence and the second reference sequence to the head and tail of each group respectively, and perform subsequent operations, and the reference signal data in the data to be transmitted will not affect the first reference sequence and the second reference sequence.

In an embodiment, the first reference sequence and the second reference sequence are both known sequences. When the processed data is subsequently filtered, by the reference sequence in the frequency domain, even if there is a certain amount of overlapping interference between each group of data, the overlapping interference part can be calculated based on the known first sequence and second sequence, avoiding adding too large guard interval to occupy resources.

In an embodiment, the first reference sequence and the second reference sequence are the same. It can be understood that the first reference sequence and the second reference sequence being the same may mean that the number of data is the same, or both the number of data and the data content are the same. The first reference sequence and the second reference sequence being the same can conveniently calculate overlapping interference based on the reference sequence.

In an embodiment, among the N groups of data sequences, the number of data contained in at least part of groups meet one of the following conditions: the number of data is the same; the ratio of the number of data is i-th power of 2. It can be understood that the situation in this embodiment where the number of data is the same or the ratio of the number of data is i-th power of 2 is the same as that in the relevant embodiment of step S120 in the above embodiment, and will not be elaborated here.

In an embodiment, N groups of first data sequences are transmitted in N frequency domain resource blocks respectively; each resource block includes subcarriers, wherein the number of subcarriers is equal to the number of data contained in each group of data sequences.

Step S230: inverse Fourier transform is performed on the N groups of first data sequences respectively. According to N groups of transformed first data sequences and M groups of fifth data sequences, P groups of second data sequences are obtained, wherein M is a positive integer, P is the sum of N and M, and the number of data contained in the P groups of second data sequences is the same.

In an embodiment, the fifth data sequence is a data sequence generated by data other than the data to be transmitted this time, and may be single-carrier or multi-carrier data, or data with different subcarrier intervals. The fifth data sequence may include the first reference sequence and the second reference sequence in the frequency domain, or may not include the first reference sequence and the second reference sequence in the frequency domain.

In an embodiment, the M groups of fifth data sequences are time domain data, and directly form P groups of second data sequences with the N groups of first data sequences that have undergone once inverse Fourier transform, wherein P is the sum of M and N, and M, N, and P are all positive integers. Furthermore, the number of data in the fifth data sequence is the same as the number of data in the first data sequence that has undergone once inverse Fourier transform, that is, the length of the fifth data sequence is the same as the length of the first data sequence that has undergone once Fourier transform.

In another embodiment, the M groups of fifth data sequences are frequency domain data, and the M groups of fifth data sequences and the N groups of first data sequences are respectively performed inverse Fourier transformed to obtain P groups of second data sequences. Furthermore, the number of data in the fifth data sequence is the same as the number of data in the first data sequence, that is, the length of the fifth data sequence is the same as that of the first data sequence.

In another embodiment, M groups of fifth data sequences are frequency domain data directly combined with N groups of first data sequences that have undergone once inverse Fourier transform to form P groups of second data sequences, where P is the sum of M and N, and M, N, and P are all positive integers. Furthermore, the number of data in the fifth data sequence is the same as the number of data in the first data sequence, that is, the length of the fifth data sequence is the same as that of the first data sequence.

In an embodiment, the number of points for inverse Fourier transform of each group of first data sequences is the same as the number of data contained in the corresponding group, and the number of points for inverse Fourier transform of each group of fifth data sequences is the same as the number of data contained in the corresponding group.

Step S240: X groups of third data sequences are obtained according to the data with the same number of columns in the P groups of second data sequences. Where X is the number of data in the second data sequence, that is, the number of groups in the third data sequence is the same as the number of data in the second data sequence.

Step S250: inverse Fourier transform is performed on the X groups of third data sequences respectively to obtain X sub-symbols.

In an embodiment, the number of points for inverse Fourier transform of each group of third data sequences is the same as the number of data contained in the corresponding group.

In an embodiment, the number of points for inverse Fourier transform of each group of third data sequences is greater than N.

Step S260: the X sub-symbols are concatenated on time domain to obtain a group of fourth data sequences.

Step S270: the fourth data sequences are transmitted on time domain.

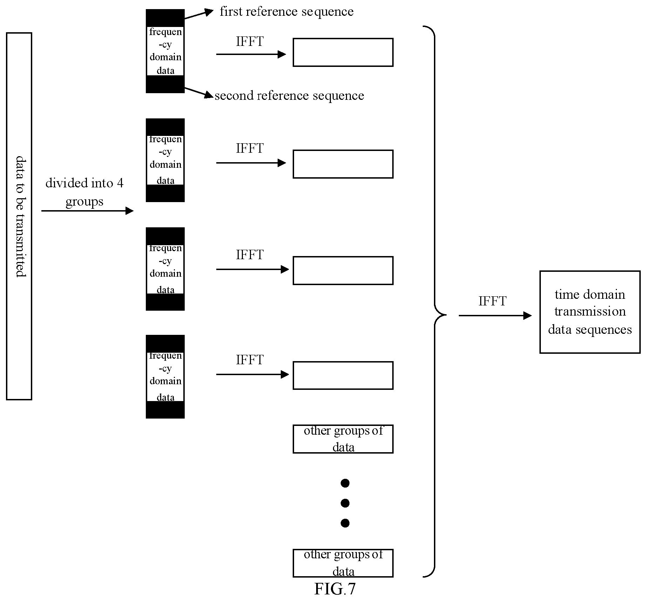

FIG. 7 is taken as an example for an exemplary explanation. FIG. 7 is a schematic diagram of a data transmission process provided by another embodiment of the present application, as shown in FIG. 7:

In this example, the data to be transmitted are divided into 4 groups, each group of data contains 28 pieces of data, and a first reference sequence is added to the head of each group of data. The first reference sequence between each group of data is the same, wherein the first reference sequence contains 2 pieces of data; a second reference sequence is added to the tail of each group of data, and the second reference sequence between each group of data is the same, wherein the second reference sequence contains 2 pieces of data; 4 groups of first data sequences are obtained, and the number of data in each group of first reference sequences is the same, all contain 32 pieces of data, and all satisfy i-th power of 2 (5th power of 2).

Each group of first data sequences is subjected to 32-point IFFT processing, and together with other groups of data sequences (i.e., the fifth data sequence) to form several groups of second data sequences. There are 4 groups of other data sequences, i.e., 4 groups of first data sequences subjected to 32-point IFFT processing and 4 groups of other data sequences form 8 groups of second data sequences. Wherein the length of the other groups of data sequences is the same as the length of the first data sequence, i.e., the number of data is the same; the other groups of data sequences do not belong to the data sequence generated by the data to be transmitted, and may be single-carrier or multi-carrier data, or data with different subcarrier intervals, and may not have the same head and tail sequences (first reference sequence and second reference sequence) in the frequency domain.

According to the data with the same number of columns in the 8 groups of second data sequences, 32 groups of third data sequences are obtained, and each group of third data sequences includes 8 pieces of data. The 32 groups of third data sequences are respectively subjected to oversampled IFFT processing to obtain 32 sub-symbols, and the 32 sub-symbols are concatenated in the time domain to form a group of fourth data sequences. The above-mentioned fourth data sequence is transmitted on the time-frequency resources.

The data transmission method of the present application can also introduce other data after the first IFFT to perform a second IFFT and transmit it together, which will not cause interference to the data to be sent currently.

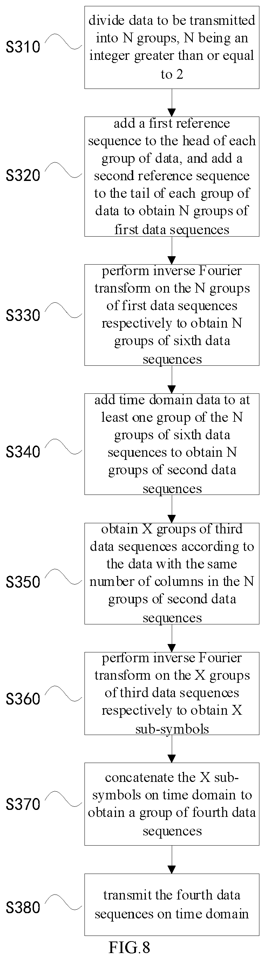

FIG. 8 is a flow chart of a data transmission method provided by another embodiment of the present application. As shown in FIG. 8, the data transmission method may be applied to, but not limited to, a base station, a terminal, or a communication system as provided in FIG. 1. In the embodiment of FIG. 8, the data transmission method may include, but is not limited to, Steps S310, S320, S330, S340, S350, S360, S370, and S380.

Step S310: data is divided to be transmitted into N groups, N being an integer greater than or equal to 2.

In an embodiment, the data to be transmitted are divided into N groups, wherein the number of data in at least one group of data is different from the number of data in the other groups of data. Exemplarily, the data to be transmitted is divided into 4 groups, wherein the number of data in the first group of data is 14, and the number of data in the remaining groups of data is 28; or, the data to be transmitted is divided into 4 groups, wherein the number of data in the first group of data and the second group of data is 14, and the number of data in the remaining groups of data is 28, which is not specifically limited here.

Step S320: a first reference sequence is added to the head of each group of data, and a second reference sequence is added to the tail of each group of data to obtain N groups of first data sequences, wherein the number of data contained in each group of first data sequences is i-th power of 2.

In an embodiment, the data to be transmitted includes constellation point modulated data.

It can be imagined that, in addition to the above-mentioned constellation point modulated data, the data to be transmitted of the present application may also include other data containing reference signals; the present application can group the data containing the reference signal together with the reference signal, add the first reference sequence and the second reference sequence to the head and tail of each group respectively, and perform subsequent operations, and the reference signal data in the data to be transmitted will not affect the first reference sequence and the second reference sequence.

In an embodiment, the first reference sequence and the second reference sequence are both known sequences. When the processed data is subsequently filtered, by the reference sequence in the frequency domain, even if there is a certain amount of overlapping interference between each group of data, the overlapping interference part can be calculated based on the known first sequence and second sequence, avoiding adding too large guard interval to occupy resources.

In an embodiment, the first reference sequence and the second reference sequence are the same. It can be understood that the first reference sequence and the second reference sequence being the same may mean that the number of data is the same, or both the number of data and the data content are the same. The first reference sequence and the second reference sequence being the same can conveniently calculate overlapping interference based on the reference sequence.

In an embodiment, among the N groups of data sequences, the number of data contained in at least part of groups meet one of the following conditions: the number of data is the same; the ratio of the number of data is i-th power of 2. It can be understood that the situation in this embodiment where the number of data is the same or the ratio of the number of data is i-th power of 2 is the same as that in the relevant embodiment of step S120 in the above embodiment, and will not be elaborated here.

In an embodiment, N groups of first data sequences are transmitted in N frequency domain resource blocks respectively; each resource block includes subcarriers, wherein the number of subcarriers is equal to the number of data contained in each group of data sequences.

Step S330: inverse Fourier transform is performed on the N groups of first data sequences respectively to obtain N groups of sixth data sequences.

In an embodiment, the number of points for inverse Fourier transform of each group of first data sequences is the same as the number of data contained in the corresponding group.

Step S340: time domain data is added to at least one group of the N groups of sixth data sequences to obtain N groups of second data sequences, wherein the time domain data is a time domain data sequence generated by inverse Fourier transform, and the N groups of second data sequences contain the same number of data.

In an embodiment, the time domain data is a data sequence obtained by the first IFFT of the first data sequence obtained after the other data to be sent are grouped. The purpose of adding the time domain data is to fill the data sequence with fewer data in the sixth data sequence so that the number of data in each group of sixth data sequences is the same (that is, the length is the same).

In another embodiment, the time domain data is other data to be sent in the time domain.

By adding other data to be sent in the time domain to the sixth data sequences, the condition that the number of data in each group of the formed second data sequence is the same can be met, and resource utilization and transmission efficiency can be improved.

In another embodiment, the time domain data can also be empty data, which is equivalent to not adding data to the sixth data sequence and the effect of sending empty subcarriers.

Step S350: X groups of third data sequences are obtained according to the data with the same number of columns in the N groups of second data sequences. Wherein the number of groups in the third data sequence is the same as the number of data in the second data sequence.

Step S360: inverse Fourier transform is performed on the X groups of third data sequences respectively to obtain X sub-symbols.

In an embodiment, the number of points for inverse Fourier transform of each group of third data sequences is the same as the number of data contained in the corresponding group.

In an embodiment, the number of points for inverse Fourier transform of each group of third data sequences is greater than N.

Step S370: the X sub-symbols are concatenated on time domain to obtain a group of fourth data sequences.

Step S310: the fourth data sequences are transmitted on time domain.

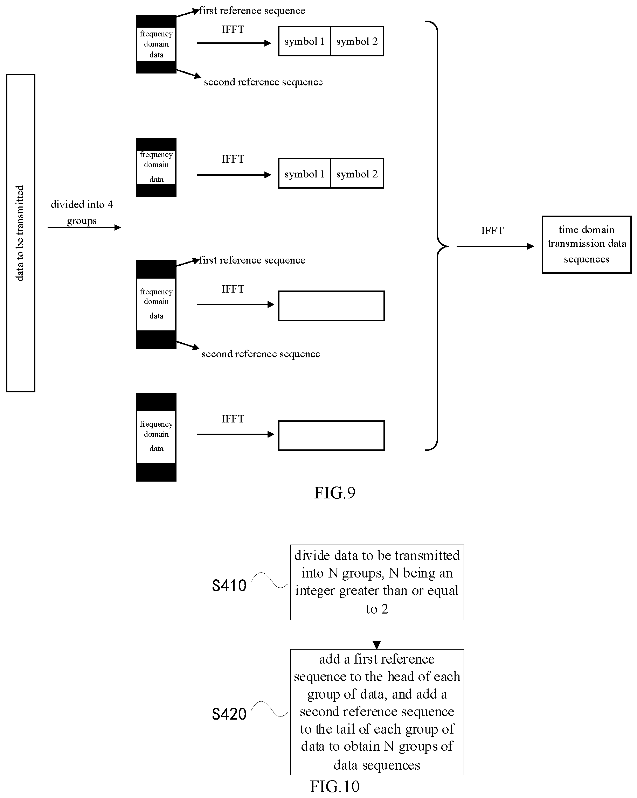

FIG. 9 is taken as an example for an exemplary explanation. FIG. 9 is a schematic diagram of a data transmission process provided by another embodiment of the present application, as shown in FIG. 9:

In this example, the data to be transmitted are divided into 4 groups, wherein the first group of data and the second group of data each contain 14 pieces of data, and the third group of data and the fourth group of data each contain 28 pieces of data. A first reference sequence is added to the head of the first and second group of data respectively, the first reference sequence is the same between each group of data, wherein the first reference sequence contains 1 piece of data; a second reference sequence is added to the tail of the first and second group of data respectively, the second reference sequence is the same between each group of data, wherein the second reference sequence contains 1 piece of data; the first and second group data after adding the reference sequence both contain 16 pieces of data. A first reference sequence is added to the head of the third and fourth group of data respectively, the first reference sequence is the same between each group of data, wherein the first reference sequence contains 2 pieces of data; a second reference sequence is added to the tail of the third and fourth group of data respectively, the second reference sequence is the same between each group of data, wherein the second reference sequence contains 2 pieces of data; the third and fourth group data after adding the reference sequence both contain 32 pieces of data. That is, 4 groups of first data sequences are obtained, wherein two groups of first data sequences contain 16 pieces of data, and the other two groups of first data sequences contain 32 pieces of data. The ratio of the number of data between each group of first data sequences is 1: 1:2:2, and the order is from the first group to the fourth group, and the ratio of the number satisfies i-th power of 2 (0th power of 2 and 1st power of 2).

The first two groups of first data sequences are processed by 16-point IFFT respectively, and the last two groups of first data sequences are processed by 32-point IFFT respectively, to obtain 4 groups of sixth data sequences. The first group of sixth data sequences is concatenated with other time domain data sequences to be sent of the same length, i.e., in FIG. 9 , symbol 1 and symbol 2 are concatenated to obtain the first group of second data sequences; the second group of sixth data sequences is concatenated with other time domain data sequences to be sent of the same length to obtain the second group of second data sequences; and finally 4 groups of second data sequences with the same number of data are obtained.

According to the data with the same number of columns in the 4 groups of second data sequences, 32 groups of third data sequences are obtained. The 32 groups of third data sequences are respectively subjected to oversampled IFFT processing to obtain 32 sub-symbols, and the 32 sub-symbols are concatenated in the time domain to form a group of time domain transmission data sequences, i.e., the fourth data sequence. The above fourth data sequence is transmitted on the time-frequency resources.

By filling the shorter sixth data sequence with the time domain data to be sent, multiple groups of second data sequences with the same number of data can be obtained, and resource utilization can also be improved.

FIG. 10 is a flow chart of a data processing method provided in an embodiment of the present application. As shown in FIG. 10, the data transmission method can be applied to, but not limited to, a base station, a terminal, or a communication system as provided in FIG. 1. In the embodiment of FIG. 10, the data processing method can include, but is not limited to, Steps S410 and S420.

Step S410: data is divided to be transmitted into N groups, N being an integer greater than or equal to 2.

Step S420: a first reference sequence is added to the head of each group of data, and a second reference sequence is added to the tail of each group of data to obtain N groups of data sequences, wherein the number of data contained in each group of data sequences is i-th power of 2.

In an embodiment, among the N groups of data sequences, at least some of the data sequences contain data that satisfies one of the following conditions: the number of data is the same; the ratio of the number of data is i-th power of 2.

In an embodiment, the first reference sequence is the same as the second reference sequence.

In an embodiment, Step S420 includes: adding a first reference sequence to the head of each group of data, and adding a second reference sequence to the tail of each group of data to obtain N groups of first data sequences, wherein the number of data contained in each group of the N groups of first data sequences is i-th power of 2.

It can be understood that the data processing method of the embodiment of the present application has the same implementation details as the corresponding steps in the data transmission method in the above embodiment, which will not be repeated here.

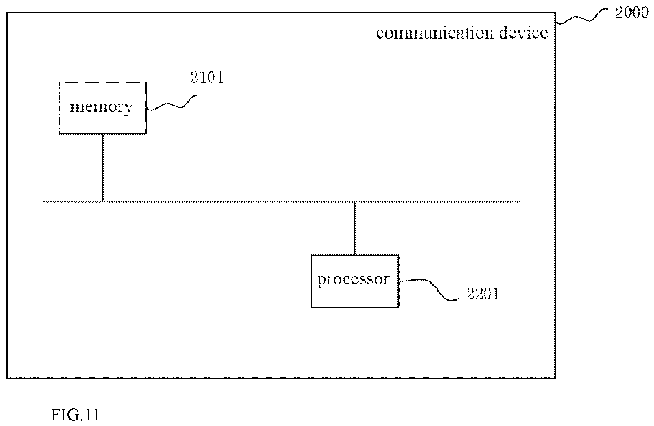

FIG. 11 is a schematic diagram of the structure of a communication device provided in an embodiment of the present application. As shown in FIG. 11, the communication device 2000 includes a memory 2100 and a processor 2200. The number of memories 2100 and processors 2200 may be one or more, and FIG. 11 takes one memory 2101 and one processor 2201 as an example; the memory 2101 and the processor 2201 in the network device may be connected via a bus or other means, and FIG. 11 takes the connection via a bus as an example.

The memory 2101, as a computer-readable storage medium, may be used to store software programs, computer executable programs, and modules, such as program instructions/modules corresponding to the method provided in any embodiment of the present application. The processor 2201 implements the data transmission method or data processing method provided in any of the above embodiments by running the software programs, instructions, and modules stored in the memory 2101.

The memory 2101 may mainly include a program storage area and a data storage area, wherein the program storage area may store an operating system and an application required for at least one function. In addition, the memory 2101 may include a high-speed random access memory, and may also include a non-volatile memory, such as at least one disk storage device, a flash memory device or other non-volatile solid-state storage device. In some instances, the memory 2101 further includes a memory remotely arranged relative to the processor 2201, and these remote memories may be connected to the device via a network. Examples of the above-mentioned network include, but are not limited to, the Internet, an intranet, a local area network, a mobile communication network, and combinations thereof.

The embodiment of the present application also provides a computer-readable storage medium storing computer executable instructions, which are used to execute a data transmission method or a data processing method as provided in any embodiment of the present application.

The embodiment of the present application also provides a computer program product, including a computer program or computer instructions, which are stored in a computer-readable storage medium. The processor of the computer device reads the computer program or computer instructions from the computer-readable storage medium, and the processor executes the computer program or computer instructions, so that the computer device executes the data transmission method or data processing method provided in any embodiment of the present application.

The system architecture and application scenarios described in the embodiment of the present application are intended to more clearly illustrate the technical solution of the embodiment of the present application, and do not constitute a limitation on the technical solution provided by the embodiment of the present application. It is known to those skilled in the art that with the evolution of the system architecture and the emergence of new application scenarios, the technical solution provided by the embodiment of the present application is also applicable to similar technical problems.

It will be understood by those skilled in the art that all or some of the steps, systems, and functional modules/units in the above disclosed methods may be implemented as software, firmware, hardware, and appropriate combinations thereof.

In hardware implementation, the division between the functional modules/units mentioned in the above description does not necessarily correspond to the division of physical components; for example, a physical component may have multiple functions, or a function or step may be performed by several physical components in cooperation. Some or all physical components may be implemented as software executed by a processor, such as a central processing unit, a digital signal processor, or a microprocessor, or implemented as hardware, or implemented as an integrated circuit, such as an application-specific integrated circuit. Such software may be distributed on a computer-readable medium, which may include a computer storage medium (or non-transitory medium) and a communication medium (or transient medium). As is well known to those skill in the art, the term computer storage medium includes volatile and non-volatile, removable and non-removable media implemented in any method or technology for storing information (such as computer-readable instructions, data structures, program modules, or other data). Computer storage media include, but are not limited to, RAM, ROM, EEPROM, flash memory or other memory technology, CD-ROM, digital versatile disk (DVD) or other optical disk storage, magnetic cassettes, magnetic tapes, disk storage or other magnetic storage devices, or any other medium that can be used to store desired information and can be accessed by a computer. In addition, it is well known to those skilled in the art that communication media generally contain computer-readable instructions, data structures, program modules, or other data in modulated data signals such as carrier waves or other transmission mechanisms, and may include any information delivery medium.

The terms "component", "module", "system", etc. used in this specification are used to represent computer-related entities, hardware, firmware, a combination of hardware and software, software, or software in execution. For example, a component can be, but is not limited to, a process running on a processor, a processor, an object, an executable file, an execution thread, a program, or a computer. By way of illustration, both applications running on a computing device and a computing device can be components. One or more components may reside in a process or an execution thread, and a component may be located on a computer or distributed between two or more computers. In addition, these components may be executed from various computer-readable media on which various data structures are stored. Components may communicate, for example, through local or remote processes based on signals having one or more data packets (e.g., data from two components interacting with another component in a local system, a distributed system, or a network, such as the Internet interacting with other systems through signals).

The above describes some embodiments of the present application with reference to the accompanying drawings, but does not limit the scope of the present application. Any modification, equivalent substitution and improvement made by those skilled in the art without departing from the scope and essence of the present application shall be within the scope of the present application.

## Claims

1. A data transmission method, comprising:
dividing data to be transmitted into N groups, N being an integer greater than or equal to 2;
adding a first reference sequence to the head of each group of data, and adding a second reference sequence to the tail of each group of data to obtain N groups of first data sequences;
performing inverse Fourier transform on the N groups of first data sequences respectively to obtain N groups of second data sequences;
performing inverse Fourier transform on the N groups of second data sequences to obtain a group of data sequences, and transmitting the group of data sequences on time-frequency resources.

2. The method according to claim 1, wherein performing inverse Fourier transform on the N groups of second data sequences comprises:
performing inverse Fourier transform of zero-padding oversampling on data of each column of the N groups of second data sequences.

3. The method according to claim 1, wherein,
the number of data contained in each group of first data sequences is i-th power of 2.

4. The method according to claim 1 or 3, wherein,
the number of data contained in the N groups of second data sequences is the same or the ratio of the number of data contained in the N groups of second data sequences is i-th power of 2.

5. The method according to any one of claims 1 to 3, wherein performing inverse Fourier transform on the N groups of second data sequences to obtain a group of data sequences, and transmitting the group of data sequences on time-frequency resources comprises:
obtaining X groups of third data sequences according to the data with the same number of columns in the N groups of second data sequences, where X is the number of columns in the second data sequence;
performing inverse Fourier transform on the X groups of third data sequences respectively to obtain X sub-symbols;
concatenating the X sub-symbols on time domain to obtain a group of fourth data sequences;
transmitting the fourth data sequences on time domain.

6. The method according to claim 1, wherein the data to be transmitted comprise at least one of the following:
constellation point modulated data;
reference signal data.

7. The method according to claim 1, wherein, among the N groups of first data sequences, the number of data contained in at least part of groups meet one of the following conditions:
the number of data is the same;
the ratio of the number of data is i-th power of 2.

8. The method according to claim 1 or 6, wherein the first reference sequence meets at least one of the following conditions that:
the data of the first reference sequence added to the head of each group of data is the same;
the first reference sequence added to the head of each group of data contains at least R pieces of data, R being a positive integer, and the R pieces of data are the same between each group.

9. The method according to claim 1 or 6, wherein the second reference sequence meets at least one of the following conditions:
the data of the second reference sequence added to the head of each group of data is the same;
the second reference sequence added to the head of each group of data contains at least Q pieces of data, Q being a positive integer, and the Q pieces of data are the same between each group.

10. The method according to claim 1 or 6, wherein,
transmitting the N groups of first data sequences on N frequency domain resource blocks respectively;
each resource block comprises subcarriers, wherein the number of subcarriers is equal to the number of data contained in each group of data sequences.

11. The method according to claim 1 or 2, wherein,
when performing inverse Fourier transform on the N groups of first data sequences respectively, zero-frequency position of each group of inverse Fourier transform data is within a corresponding frequency domain resource block, the zero-frequency position is different when performing the inverse Fourier transform on each group of inverse Fourier transform data, the zero-frequency position is respectively in one of the subcarriers of the frequency domain resource block corresponding to each group of inverse Fourier transform data.

12. The method according to claim 11, wherein,
the frequency domain resource blocks corresponding to each group of inverse Fourier transform data are all or part of the frequency domain resource blocks in a channel bandwidth, and the data to be transmitted are all or part of the data to be transmitted in the channel bandwidth.

13. The method according to claim 1 or 6, wherein the number of points for inverse Fourier transform on each group of data sequence is the same as the number of data contained in the corresponding group; the number of points for inverse Fourier transform on each group of data sequence is i-th power of 2, where i being an integer.

14. The method according to claim 1 or 6, wherein transmitting the fourth data sequences on time domain comprises: filtering or windowing the fourth data sequences.

15. The method according to claim 1, wherein performing inverse Fourier transform on the N groups of second data sequences comprises:
forming P groups of sixth data sequences according to the N groups of second data sequences and M groups of fifth data sequences, and performing inverse Fourier transform of zero-padding oversampling on data of each column of the P groups of sixth data sequences, where M being a positive integer, P being a sum of N and M.

16. The method according to claim 1, wherein performing inverse Fourier transform on the N groups of second data sequences comprises:
adding time domain data to at least one of the N groups of second data sequences to obtain N groups of seventh data sequences, wherein the time domain data is a time domain data sequence generated by inverse Fourier transform, and the number of data contained in the N groups of seventh data sequences is the same; performing inverse Fourier transform of zero-padding oversampling on data of each column of the N groups of seventh data sequences.

17. A data processing method, comprising:
dividing data to be transmitted into N groups, N being an integer greater than or equal to 2;
adding a first reference sequence to the head of each group of data, and adding a second reference sequence to the tail of each group of data to obtain N groups of first data sequences;
performing inverse Fourier transform on the N groups of first data sequences respectively to obtain N groups of second data sequences;
performing inverse Fourier transform on the N groups of second data sequences to obtain a group of data sequences.

18. The method according to claim 17, wherein the number of data contained in the N groups of first data sequences is i-th power of 2, and the number of data contained in at least part of groups meet one of the following conditions:
the number of data is the same;
the ratio of the number of data is i-th power of 2.

19. The method according to claim 17 or 18, wherein the first reference sequence meets at least one of the following conditions:
the data of the first reference sequence added to the head of each group of data is the same;
the first reference sequence added to the head of each group of data contains at least R pieces of data, R being a positive integer, and the R pieces of data are the same between each group.

20. The method according to claim 17 or 18, wherein the second reference sequence meets at least one of the following conditions:
the data of the second reference sequence added to the head of each group of data is the same;
the second reference sequence added to the head of each group of data contains at least Q pieces of data, Q being a positive integer, and the Q pieces of data are the same between each group.

21. A communication device, comprising: a memory, a processor, and a computer program stored in the memory and executable on the processor, wherein the processor, when executing the computer program, implements the data transmission method according to any one of claims 1 to 16 or the data processing method according to any one of claims 17 to 20.

22. A computer-readable storage medium, having computer-executable instructions stored thereon, wherein the computer-executable instructions are configured for executing the data transmission method according to any one of claims 1 to 16, or the data processing method according to any one of claims 17 to 20.

23. A computer program product, comprising a computer program or computer instructions, the computer program or the computer instructions are stored in a computer-readable storage medium, and a processor of a computer device reads the computer program or the computer instructions from the computer-readable storage medium, and the processor executes the computer program or the computer instructions, so that the computer device implements the data transmission method according to any one of claims 1 to 16, or the data processing method according to any one of claims 17 to 20.
